# EUROPEAN PATENT APPLICATION

(11) **EP 4 636 515 A1**
(43) Date of publication of application: **22.10.2025**
(21) Application number: 23903405.1
(22) Date of filing: 07.12.2023
(51) Int. Cl.: G05B 19/05, G06F 8/41

(54) **DEVELOPMENT ASSISTANCE DEVICE, DEVELOPMENT ASSISTANCE METHOD, AND DEVELOPMENT ASSISTANCE PROGRAM**

(30) Priority: 13.12.2022 JP 2022198597
(71) Applicant: OMRON Corporation, Kyoto 600-8530 (JP)
(72) Inventor: KATO, Yoshihisa, Kyoto-shi, Kyoto 600-8530 (JP); NAGAO, Kenjiro, Kyoto-shi, Kyoto 600-8530 (JP); TAMAGAKI, Yutaka, Kyoto-shi, Kyoto 600-8530 (JP)
(74) Representative: Mewburn Ellis LLP
(86) International application number: PCT/JP2023/043806
(87) International publication number: WO 2024/128118

(57) **Abstract**

There is provided a mechanism capable of switching between a mode in which a part of a source code of a control program is concealed and a mode in which the part of the source code can be published. A source code of a control program (210) includes a first source code (211) to be concealed and a second source code (214) other than the first source code; a development support device includes a code generation unit configured to generate an object code from the source code of the control program and output the object code; and when an instruction indicates a first mode, the code generation unit outputs, for the first source code, both the first source code and a first object code generated from the first source code, and when the instruction indicates a second mode, the code generation unit outputs the first object code generated from the first source code without outputting the first source code.

## Description

### TECHNICAL FIELD

The present disclosure relates to a technique for supporting development of a control program for a control device configured to control a target.

### BACKGROUND ART

Control devices such as programmable logic controllers (PLCs) have been introduced in various manufacturing sites. Such control devices are a type of computer, which can control a control target such as a manufacturing device or a manufacturing facility when a control program designed according to the target is executed.

Techniques have been proposed to prevent unauthorized use of such a control program. For example, Japanese Patent Laying-Open No. 2020-181364 (PTL 1) discloses a technique of creating, based on a MAC address of a PLC, an authentication file that allows operation of an operating program for the PLC.

### CITATION LIST

### PATENT LITERATURE

PTL 1: Japanese Patent Laying-Open No. 2020-181364

### SUMMARY OF INVENTION

### TECHNICAL PROBLEM

If a source code of a control program is published, the control program may be viewed or the source code may be falsified by a malicious third party, which poses a risk of unauthorized use. At production sites, there is a need to publish a source code in a viewable manner for maintenance and the like, and a need to conceal the source code to protect it from the above-mentioned risk, for a control program installed in a PLC. Although PTL 1 discloses a technique of giving the PLC permission to use the operating program, it does not propose a technique of satisfying these needs for a control program.

One object of the present disclosure is to provide a mechanism capable of switching between a mode in which a part of a source code of a control program is concealed and a mode in which the part of the source code can be published.

### SOLUTION TO PROBLEM

A development support device according to the present disclosure is a device for supporting development of a control program for a control device configured to control a target, a source code of the control program including a first source code to be concealed and a second source code other than the first source code, the development support device including: a reception unit configured to receive an instruction for the development support device; a determination unit configured to determine whether the instruction received by the reception unit indicates a first mode or a second mode; and a code generation unit configured to generate an object code from the source code of the control program and output the object code. In response to a determination that the received instruction indicates the first mode, the code generation unit outputs, for the first source code, both the first source code and a first object code generated from the first source code, and in response to a determination that the received instruction indicates the second mode, the code generation unit outputs the first object code generated from the first source code without outputting the first source code.

According to the above disclosure, the development support device can switch, in accordance with the received instruction, between a mode in which a part of the source code of the control program is concealed and a mode in which the part of the source code can be published.

In the above disclosure, the development support device further includes: a communication interface configured to allow communication with the control device; and a transfer unit configured to transfer a code output from the code generation unit to the control device via the communication interface.

According to the above disclosure, mode switching can be implemented between the first mode in which the first source code is transferred to the control device without being concealed and the second mode in which the first source code is transferred while being concealed.

**In** the above disclosure, the development support device further includes: a library of the control program; and a first project configured to store, in each of the first mode and the second mode, a code output from the code generation unit in that mode in the library of the control program.

According to the above disclosure, mode switching can be implemented between the first mode in which the first source code of the control program is stored in the library without being concealed and the second mode in which the first source code of the control program is stored in the library while being concealed.

In the above disclosure, the development support device further includes a second project configured to generate a file to be transferred to the control device, the second source code includes a reference instruction element configured to indicate a reference to a code stored in the library, and in each of the first mode and the second mode, the second project references a code stored in the library in that mode in accordance with the reference instruction element of the second source code, and includes the code in the file.

According to the above disclosure, in the first mode or the second mode, the generation of the first source code or the first object code can be implemented by referencing the code stored in the library.

A development support method according to the present disclosure is a method for supporting development of a control program for a control device configured to control a target, a source code of the control program including a first source code to be concealed and a second source code other than the first source code, the method including: receiving an instruction; determining whether the received instruction indicates a first mode or a second mode; and generating an object code from the source code of the control program and outputting the object code, in which the generating and outputting the object code includes, in response to a determination that the received instruction indicates the first mode, outputting, for the first source code, both the first source code and a first object code generated from the first source code, and in response to a determination that the received instruction indicates the second mode, outputting the first object code generated from the first source code without outputting the first source code.

A development support program according to the present disclosure is a program for causing a computer to execute a method for supporting development of a control program for a control device configured to control a target, a source code of the control program including a first source code to be concealed and a second source code other than the first source code, the method including: receiving an instruction; determining whether the received instruction indicates a first mode or a second mode; and generating an object code from the source code of the control program and outputting the object code, in which the generating and outputting the object code includes, in response to a determination that the received instruction indicates the first mode, outputting, for the first source code, both the first source code and a first object code generated from the first source code, and in response to a determination that the received instruction indicates the second mode, outputting the first object code generated from the first source code without outputting the first source code.

In the above disclosure, the development support device further includes a condition determination unit configured to determine, in response to the determination that the received instruction indicates the second mode, whether the first source code satisfies a condition for using the second mode.

According to the above disclosure, when the second mode is specified, the development support device determines whether the first source code satisfies the condition for using the second mode.

In the above disclosure, when the first object code is generated from the first source code by the code generation unit, the condition determination unit determines whether the first source code satisfies the condition.

According to the above disclosure, the above-described condition determination is performed when the object code is generated.

In the above disclosure, an editor configured to edit and generate the source code of the control program in accordance with a user operation is further provided, and when the editor edits the first source code, the condition determination unit determines whether the edited first source code satisfies the condition.

According to the above disclosure, the above-described condition determination is performed when the first source code is edited.

In the above disclosure, the control program includes one or a plurality of unit programs constituting the control program, the first source code indicates a source code corresponding to one or more unit programs of the one or the plurality of unit programs, the one or more unit programs include a variable declaration defining a variable referenced by an instruction element included in the unit programs, and the condition includes a condition for the variable defined in the variable declaration.

According to the above disclosure, the condition for the variable declared in the unit program corresponding to the first source code can be included in the use condition.

In the above disclosure, the development support device further includes a GUI, and in response to a determination that the first source code does not satisfy the condition, the GUI outputs a result of the determination, and receives a user operation for correcting the first source code.

According to the above disclosure, the GUI configured to output the result of the determination of whether the first source code satisfies the condition for using the second mode and to receive the user operation for correcting the code to satisfy the condition is provided.

### ADVANTAGEOUS EFFECTS OF INVENTION

According to the present disclosure, there can be provided a mechanism capable of switching between a mode in which a part of a source code of a control program is concealed and a mode in which the part of the source code can be published.

### BRIEF DESCRIPTION OF DRAWINGS

Fig. 1 is a schematic diagram showing an exemplary configuration of a factory automation (FA) system 10 to which a development support device according to the present embodiment is applied.
Fig. 2 is a schematic diagram showing an exemplary hardware configuration of a support device 100.
Fig. 3 is a diagram schematically showing an exemplary functional configuration of support device 100.
Fig. 4 is a diagram schematically showing an exemplary development environment for a control program in support device 100.
Fig. 5 is a flowchart showing a schematic development procedure for the control program.
Fig. 6 is a diagram showing an exemplary control program.
Fig. 7 is a diagram showing an exemplary variable definition list corresponding to the control program in Fig. 6.
Fig. 8 is a conceptual diagram illustrating operation of the control program.
Fig. 9 is a diagram schematically showing a process of control program development in a first mode according to the present embodiment.
Fig. 10 is a diagram schematically showing a process of control program development in a second mode according to the present embodiment.
Fig. 11 is a diagram illustrating use conditions 274 according to the present embodiment.
Fig. 12 is a flowchart showing a schematic process of editing a new FUN/FB in light of use conditions 274.
Fig. 13 is a flowchart showing a schematic process of newly creating a library 275.
Fig. 14 is a flowchart showing a schematic process of setting a library reference in a standard project.
Fig. 15 is a flowchart showing a schematic process of changing a FUN/FB in a library project.
Fig. 16 is a flowchart showing a schematic process of changing library 275.
Fig. 17 is a flowchart showing a schematic process of changing a FUN/FB in the standard project.
Fig. 18 is a flowchart showing a schematic process of the library project when a version setting of the standard project is changed.
Fig. 19 is a flowchart showing a schematic process of library 275 when the version setting of the standard project is changed.
Fig. 20 is a flowchart showing a schematic process of the standard project when the version setting of the standard project is changed.
Fig. 21 is a schematic diagram illustrating library 275 satisfying use conditions 274 according to the present embodiment.
Fig. 22 is a diagram illustrating a procedure of creating library 275 in the standard project.
Fig. 23 is a diagram illustrating the procedure of creating library 275 in the standard project.
Fig. 24 is a diagram showing an exemplary setting method by a GUI satisfying a use condition.
Fig. 25 is a diagram showing an exemplary setting method by the GUI satisfying a use condition.
Fig. 26 is a diagram showing an exemplary setting method by the GUI satisfying a use condition.
Fig. 27 is a diagram showing an exemplary setting method by the GUI satisfying a use condition.
Fig. 28 is a diagram showing an exemplary setting method by the GUI satisfying a use condition.
Fig. 29 is a diagram showing an exemplary setting method by the GUI satisfying a use condition.
Fig. 30 is a diagram showing an exemplary setting method by the GUI satisfying a use condition.
Fig. 31 is a diagram showing an exemplary GUI that receives a user operation of inputting an instruction 51 for support device 100.
Fig. 32 is a diagram showing an exemplary GUI that receives the user operation of inputting instruction 51 for support device 100.
Fig. 33 is a diagram showing an exemplary GUI that receives the user operation of inputting instruction 51 for support device 100.

### DESCRIPTION OF EMBODIMENTS

An embodiment according to the present invention will be described hereinafter with reference to the drawings. In the following description, the same parts and components are designated by the same reference characters. Their names and functions are also the same. Therefore, detailed description thereof will not be repeated in principle.

### <A. Application Example>

First, in the present embodiment, a control program is created using a device which supports program development and which is prepared separately from a controller. A source code of a control program is a result of describing (editing) the program in a predetermined type of programming language, and generally refers to a user-interpretable code. An object code is a result of converting the source code into a computer (machine)-executable format. The object code includes a code interpretable by a computer and practically uninterpretable by a human, such as a binary code.

In addition, "concealing" of a source code refers to preventing the source code from being leaked. For "concealing" of a source code, a method of outputting only an object code generated from the source code without outputting the source code is adopted in the present embodiment. For "publishing" of a source code, a method of outputting the source code without concealing the source code is adopted.

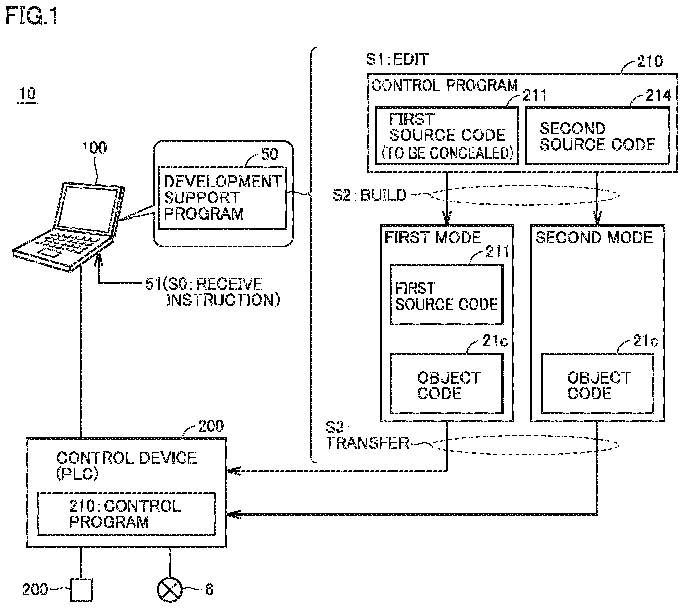

Fig. 1 is a schematic diagram showing an exemplary configuration of a factory automation (FA) system 10 to which a development support device according to the present embodiment is applied. First, in Fig. 1, FA system 10 includes a development support device 100 (hereinafter referred to as support device 100) and one or a plurality of control devices (controllers) 200.

Control device 200 is connected to a field device group including one or a plurality of devices 6 via a field bus. Moreover, control devices 200 are connected to each other over a local network. Control device 200 is configured to be connectable to support device 100.

Each of control devices 200 is embodied as a computer such as a PLC. Control device 200 executes a control program 210 based on an input value from the field device group, performs a control operation for controlling device 6, and outputs an output value resulting from the operation to device 6. The output value includes a command value. Device 6 includes an apparatus, such as a sensor, that collects a state value of a manufacturing device, a production line or the like associated with control as an input value. Device 6 may also include an apparatus, such as an output relay, a contactor, a servo driver, a servo motor, or any other actuator, that exerts some action onto the production line or the like in accordance with the command value. Device 6 exchanges data including the input value and the output value with control device 200 over a network.

Support device 100 includes, for example, any one of a notebook or desktop personal computer (PC), a tablet terminal, a smartphone, and other information processing devices.

Support device 100 is configured such that a development support program 50 can be installed therein. Development support program 50 is an application for supporting development of control program 210 for control device 200. Development support program 50 includes, for example, "Sysmac Studio" manufactured by OMRON Corporation. Support device 100 executes development support program 50 to thereby provide an environment for program development. A user designs control program 210 in the development environment, and control program 210 thus designed is transferred to and installed in control device 200 over a network or via a storage medium.

Communication between control device 200 and device 6 employs Ethernet^{®}, or OPC UA^{®} that performs fixed-cycle communication to guarantee data arrival time, for example. Communication between control device 200 and support device 100 employs a local area network (LAN) or a universal serial bus (USB), for example.

Support device 100 provides a development environment for a user program including control program 210 executed in control device 200. The user operates support device 100 to create control program 210. Specifically, support device 100 receives an instruction 51 based on a user operation on support device 100 (step S0). Support device 100 executes development support program 50 to thereby perform editing (step S1) and building (step S2) to generate control program 210, and perform transferring (step S3) of generated control program 210 to control device 200. In the editing (step S1), support device 100 edits or generates a source code of control program 210 in accordance with a user operation, and in the building (step S2), support device 100 generates an object code from the source code. In the transferring (step S3), the source code or the object code of control program 210 is transferred to control device 200.

In the present embodiment, the source code generated in the editing includes a first source code 211 to be concealed and a second source code 214 other than first source code 211. Support device 100 determines received instruction 51, and performs a process according to a result of the determination in the building. More specifically, in response to a determination that instruction 51 indicates a first mode, support device 100 generates, for first source code 211, an object code 21c from first source code 211, and outputs both first source code 211 and generated object code 21c so as to allow publishing of first source code 211. First source code 211 is thus published. On the other hand, in response to a determination that instruction 51 indicates a second mode, support device 100 generates, for first source code 211, object code 21c from first source code 211, and outputs only object code 21c without outputting first source code 211. First source code 211 is thus concealed.

In the present embodiment, the outputting of the source code and the object code of control program 210 includes storing or saving them into a storage medium inside or outside support device 100, displaying them on a display, transferring them to an external device such as control device 200 over a network, and the like. The output destination storage medium includes a library 275 described later.

In this way, by outputting instruction 51 to support device 100, the user can switch, in support device 100, between the mode in which first source code 211, which is a part of the source code of control program 210, is published, and the mode in which first source code 211 is concealed. A more specific application example of this embodiment is described below.

### <B. Hardware Configuration of Support Device>

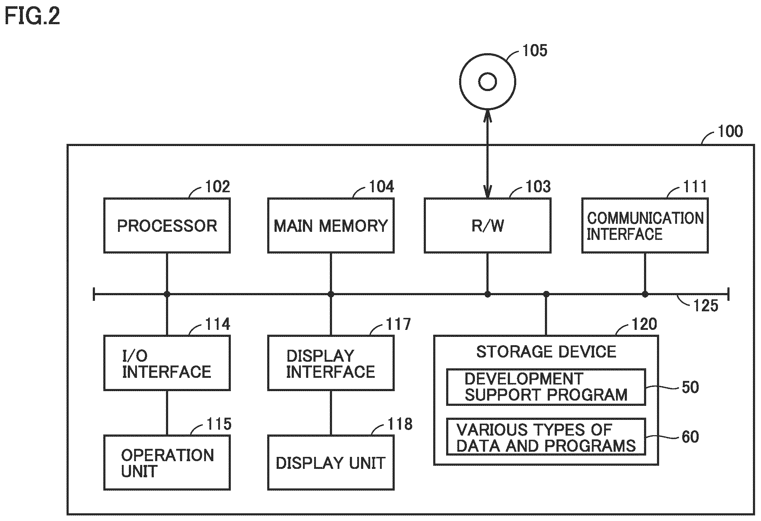

A hardware configuration of support device 100 is described with reference to Fig. 2. Fig. 2 is a schematic diagram showing an exemplary hardware configuration of support device 100.

Support device 100 is implemented, as an example, by a computer configured according to a general-purpose computer architecture. Support device 100 includes: a processor 102 including a central processing unit (CPU) or a micro-processing unit (MPU); an R/W (which stands for a reader/writer) 103 on which an optical disk 105 such as a compact disc read only memory (CD-ROM) is removably mounted; a main memory 104; a communication interface 111; an input/output (I/O) interface 114; a display interface 117; and a nonvolatile storage device 120. These components are communicably connected to each other via an internal bus 125. Main memory 104 includes a read only memory (ROM), a random access memory (RAM), and the like. Storage device 120 includes a hard disk drive (HDD), a solid state drive (SSD), and the like. R/W 103 accesses mounted optical disk 105 based on an instruction from processor 102. Although Fig. 2 shows optical disk 105 as an exemplary external storage medium, this is not a limitation, and another storage medium such as a USB memory may be employed.

Processor 102 deploys and executes development support program 50 stored in storage device 120 onto main memory 104, to thereby activate a development tool for control program 210 (see Fig. 1) and provide a development environment. Storage device 120 stores various types of data and programs 60 in addition to development support program 50. A source program of control program 210 to be developed is stored in a storage unit of support device 100 in a volatile or nonvolatile manner.

Communication interface 111 exchanges data with other communication devices over a network. The other communication devices include, for example, control device 200 and device 6 shown in Fig. 1, a server which is not shown, and the like. Support device 100 may be configured to be able to download various programs such as development support program 50 from the other communication devices via communication interface 111.

I/O interface 114 is connected to an operation unit 115, and acquires a signal indicating a user operation from operation unit 115. Operation unit 115 typically includes a keyboard, a mouse, a touch panel, a touch pad, and the like, and is configured to be able to receive an operation from the user. Operation unit 115 may be integrated with or separate from support device 100.

Display interface 117 is connected to a display unit 118, and transmits an image signal for displaying an image to display unit 118 in accordance with a command from processor 102. Display unit 118 is implemented by a liquid crystal display (LCD), an organic electro luminescence (EL) display, or the like, and presents various types of information to the user. Display unit 118 may be integrated with or separate from support device 100.

Although Fig. 2 shows an exemplary configuration in which necessary functions are provided by execution of a program by processor 102 such as a CPU, some or all of these provided functions may be implemented by using dedicated hardware circuitry (e.g., an application specific integrated circuit (ASIC), a field-programmable gate array (FPGA), or the like). In this case, virtualization technology may be used to execute a plurality of operating systems (OSs) with different applications in parallel, and to execute a necessary application on each OS. Although an example in which support device 100 executes the entire processing has been illustrated in the description above, this is not a limitation, and a plurality of devices may cooperate to provide the functions as described above. Furthermore, some or all of the functions may be implemented by using a calculation resource, which is the so-called cloud, on a server.

### <C. Functional Configuration of Support Device>

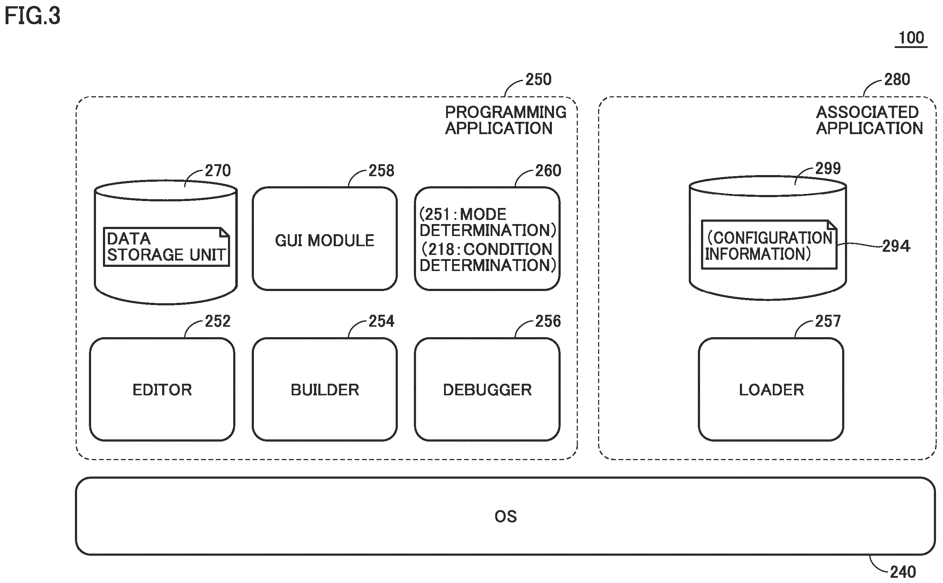

A functional configuration of support device 100 is described with reference to Fig. 3. Fig. 3 is a diagram schematically showing an exemplary functional configuration of support device 100.

An OS 240, a programming application 250 and an associated application 280 are implemented on support device 100. Support device 100 executes OS 240 to thereby provide an environment in which programming application 250 and associated application 280 can be executed. Development support program 50 for implementing support device 100 according to the present embodiment includes at least programming application 250.

Associated application 280 is an application associated with programming application 250, and includes, for example, a loader 257, and configuration information 294 stored in a data storage unit 299. Data storage unit 299 includes a storage medium of support device 100, for example, storage device 120. Support device 100 obtains configuration information 294 from control device 200, and stores obtained configuration information 294 in data storage unit 299. Configuration information 294 includes: information including, for example, an IP address for support device 100 to communicate with control device 200 connected to a network; and information for identifying a model and a version of control device 200. Loader 257 communicates with control device 200 based on configuration information 294, and transfers information about control program 210 to control device 200.

Programming application 250 includes an editor 252, a builder 254, a debugger 256, a graphical user interface (GUI) module 258, a determination module 260, and a data storage unit 270. Determination module 260 includes a mode determination module 251 that determines a mode during control program development based on instruction 51, and a condition determination module 218 that determines whether the source code satisfies use conditions 274 described later. Each of the modules included in programming application 250 is typically distributed in a state of being stored in a non-volatile storage medium such as a CD-ROM, and installed in support device 100. Data storage unit 270 includes a storage medium of support device 100, for example, storage device 120.

Editor 252 provides functions such as inputting and editing for creating the source code of control program 210 in accordance with a specification of a predetermined programming language. The source code can be typically described using any language such as a ladder diagram (LD), an instruction list (IL), a structured text (ST), a function block diagram (FBD), or a sequential function chart (SFC), as defined in International Standard IEC 61131-3.

The source code is described using a "variable" in any language. The "variable" is an identifier provided to data handled in control program 210. Typically, the "variable" is data representing states of control device 200 and device 6 to be controlled, or representing a control command output to device 6 from control device 200. In other words, the "variable" refers to data having a value that changes in conjunction with the states of control device 200 and the control target. The concept of "variable" includes data representing one value, data represented as an array, data represented as a structure, and various types of data that can be defined in control program 210.

Editor 252 receives a user operation on support device 100, for example, a user operation on operation unit 115, via GUI module 258. Editor 252 provides a function to generate a source code in accordance with the received operation, and a function to store the generated source code. Editor 252 also provides a function to edit the source code in accordance with a user operation. When generating or editing the source code by editor 252, editor 252 causes display unit 118 to display information for supporting editing work via GUI module 258.

Debugger 256 provides a function to debug the source code. Debugger 256 causes display unit 118 to display information for supporting the debugging via GUI module 258.

Builder 254 provides a function to build the source code and create an execution code in a format executable by control device 200, in accordance with the specification of the programming language describing control program 210. Builder 254 includes a compiler 212 and a linker 216 described later. Compiler 212 compiles the source code on a file-by-file basis to generate an object code from the source code, for example. Linker 216 links a plurality of files of the object code output from the compiler to generate an executable file 217 described later. Executable file 217 constitutes a unit of a program that can be activated by a processor of control device 200. The plurality of files handled by linker 216 to generate executable file 217 also include a file in library 275 described later.

Programming application 250 may also include a debugger for debugging the source code, or a simulator that provides, in support device 100, an environment for simulation of the execution of control program 210 by control device 200.

Data storage unit 270 stores various types of information used (read and written) by each unit of programming application 250. The information stored in data storage unit 270 will be described later.

### <D. Development Environment for Control Program>

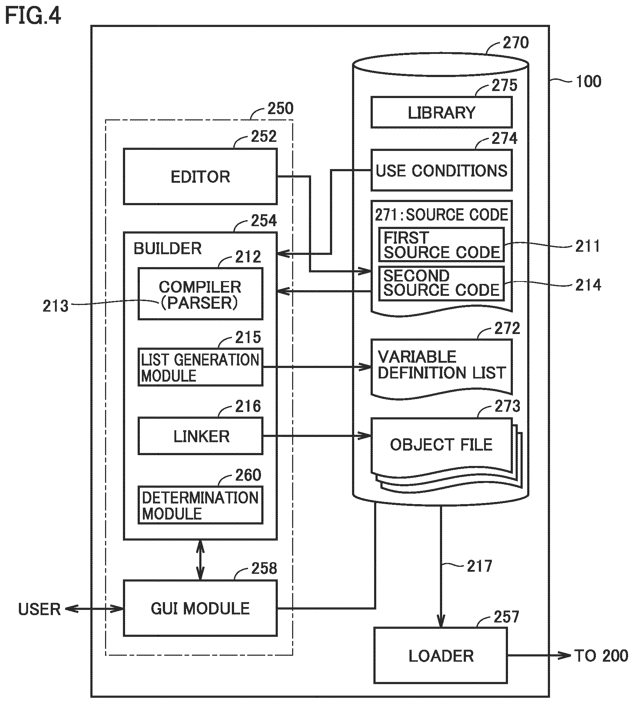

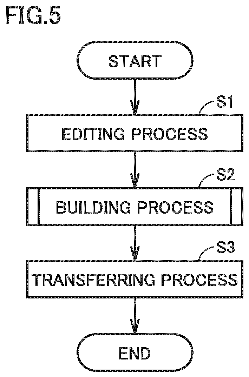

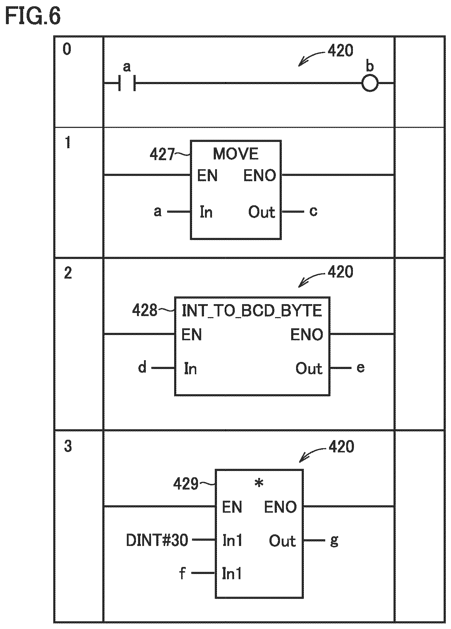

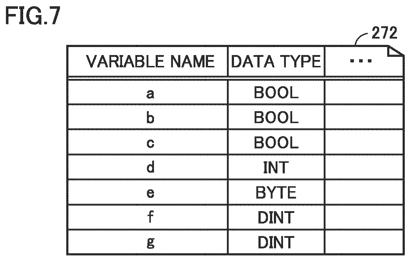

Next, a development environment for a control program in support device 100 is described with reference to Fig. 4. Fig. 4 is a diagram schematically showing an exemplary development environment for a control program in support device 100. Fig. 5 is a flowchart showing a schematic development procedure for the control program. Fig. 6 is a diagram showing an exemplary control program. The control program in Fig. 6 is described by a ladder circuit 420 including FUNs/FBs 427, 428 and 429. Fig. 7 is a diagram showing an exemplary variable definition list corresponding to the control program in Fig. 6.

In the following, a source code 271 of control program 210 includes an instruction unit that describes processing to be executed in control device 200 with variables. The instruction unit includes an instruction element described with variables. The "instruction element" generically refers to elements that describe the instruction unit of source code 271, and includes, for example, an operator, a function block, a function, and an operand. Source code 271 can be described in a programming language that can be displayed in a circuit form in which a plurality of instruction elements are connected to each other. The following is directed to a source code described in LD as shown in Fig. 6 as a typical example.

Fig. 4 shows GUI module 258 in association with editor 252 and builder 254 constituting programming application 250. GUI module 258 controls display interface 117 and I/O interface 114 to implement interaction between editor 252 or builder 254 and the user. GUI module 258 corresponds to an example of "interface" for interacting with the user. Of the components of builder 254, Fig. 4 shows compiler 212, a list generation module 215, linker 216, and determination module 260.

Fig. 4 also shows data storage unit 270 in association with the components constituting programming application 250. Of the data in data storage unit 270, Fig. 4 shows library 275, use conditions 274, source code 271 of control program 210, a variable definition list 272, and an object code 273 in a file format, which are associated with editor 252 and builder 254.

Use conditions 274 indicate conditions that should be satisfied by first source code 211, for generating an object code in the second mode for first source code 211 to be concealed included in source code 271.

Control program 210 includes one or more program organization units (POUs) constituting the program. The POU is a unit constituting the program. The POU is constituted of a plurality of instruction elements. The POU is the minimum unit of program management, and includes a program, a function (FUN), a function block (FB), and the like. The program is different from a program described in a function block diagram language such as the FUN or the FB, and includes a program described in, for example, a ST language, and the like.

Control program 210 includes a ladder program, which includes a FUN or a FB described by an instruction defined in the form of a function block. The FUN indicates an instruction having no internal state used for four arithmetic operations or type conversion. The FB indicates an instruction having an internal state for performing a predetermined function. The program indicates a different type of instruction from the FUN and the FB. Such a POU is stored in library 275 with its code in a file format, such that the POU can be reused as a component. In the present embodiment, library 275 is configured to store one or both of the FUN and the FB.

Editor 252 edits source code 271 of control program 210 in accordance with a user operation received via operation unit 115, and stores the source code (step S1 in Fig. 5). During this editing, editor 252 edits and generates, in accordance with a user operation, a source code of a declaration unit that declares variables. The declaration unit includes, for each variable, attributes such as a variable name, a data type, and a type (a type such as a global variable, a local variable, an allocation variable). The data type includes, without limitation, a logic (BOOL), an integer (INT, BYTE), a real number (REAL), a double precision integer (DINT), and the like, and the size (capacity) of a data area described later varies with the data type. The global variable is a common variable accessible from all POUs, and the local variable is a variable accessible from only one POU.

Debugger 256 debugs source code 271. For example, debugger 256 determines whether the attribute of a variable referenced by the instruction element included in source code 271 is consistent with the attribute of a variable declared in the declaration unit, and when inconsistency is determined, debugger 256 outputs a bug indicating a result of the determination. The user corrects (edits) the declaration unit or the source code to remove the bug.

List generation module 215 generates variable definition list 272 from the source code of the variable declaration unit in source code 271, and stores the variable definition list in a file format. Variable definition list 272 is a list defining a variable and an attribute referenced by the instruction element included in source code 271. Variable definition list 272 includes: one or more declared variables; and for each variable, at least a variable name, a data type of the variable, and a type (a type such as a global variable, a local variable, and an allocation variable).

When source code 271 of the program representing the ladder circuit of the FUN or the FB described in the function block diagram language shown in Fig. 6 is generated by editor 252, variable definition list 272 as shown in Fig. 7 is generated by list generation module 215. Although variable definition list 272 in Fig. 7 indicates a variable name and a data type for each variable used in source code 271 in Fig. 6, variable definition list 272 also includes the above-mentioned type for each variable.

Builder 254 is an example of "code generation unit." Builder 254 generates executable file 217 of the object code from source code 271 and variable definition list 272 (step S2 in Fig. 5). When generating this object code, in response to a determination by mode determination module 251 that instruction 51 indicates the first mode, builder 254 generates, for first source code 211, an object code from first source code 211, and outputs both the first source code and the generated object code. On the other hand, in response to a determination by mode determination module 251 that instruction 51 indicates the second mode, builder 254 generates, for first source code 211, an object code from first source code 211, and outputs only the generated object code without outputting first source code 211.

In the generation of such an object code, a parser 213 of compiler 212 parses source code 271 and divides the source code into a plurality of files based on a result of the parsing, and compiler 212 compiles the source code on a file-by-file basis to create the plurality of object files 273 each having an object code. Linker 216 links (combines) an object file of variable definition list 272 and the plurality of object files 273 to generate executable file 217. The plurality of files linked by the linker may include a file in referenced (called) library 275.

In the generation of such an object code, in response to the determination that instruction 51 indicates the second mode, support device 100 determines, as condition determination module 218, whether first source code 211 to be concealed included in source code 271 satisfies use conditions 274. Details of use conditions 274 and a method for determination will be described later.

Loader 257 controls communication interface 111 to transfer executable file 217 generated by builder 254 to control device 200 (step S3 in Fig. 5).

### <E. Operation of Control Program in Control Device 200>

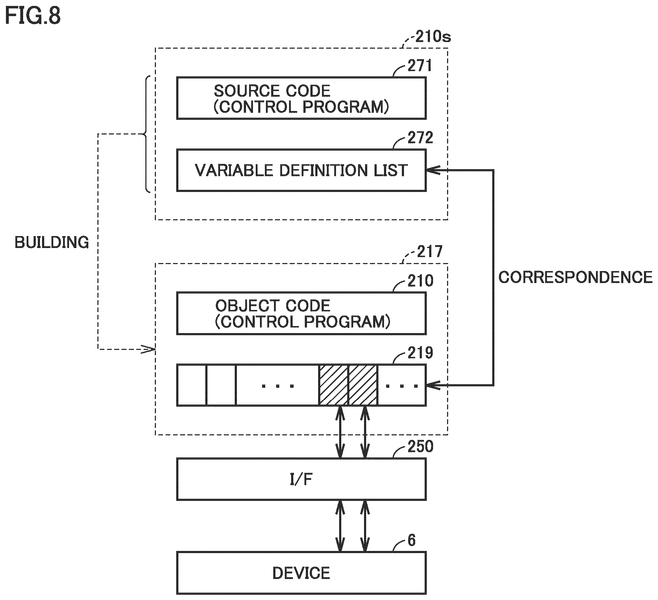

Fig. 8 is a conceptual diagram illustrating operation of the control program. Support device 100 creates a source program 210s including source code 271 of the control program and variable definition list 272. Although Fig. 8 represents source code 271 and variable definition list 272 separately, source code 271 and variable definition list 272 may be integrated into a file in source program 210s.

In support device 100, when source program 210s is built, executable file 217 of control program 210 is created, transferred by loader 257, and downloaded to control device 200. At this time, in control device 200, the processor of control device 200 reserves, for control program 210, a memory area 219 for storing the variables declared on variable definition list 272. In memory area 219, a data area with a capacity size in accordance with a corresponding data type is reserved for each of the variables declared on variable definition list 272.

Each device 6 can access the variables in memory area 219 through data communication over a network via an I/F (which stands for a network interface) 250. For example, in the example of Fig. 8, the variables stored in hatched areas are accessed from device 6. Conversely, data can be input to control device 200 (memory area 219) from the device 6 side.

When the object code of executable file 217 is executed by the processor inside control device 200, control device 200 exchanges data with device 6 to be controlled via the data area for each variable of memory area 219, and controls device 6 in accordance with the control program.

### <F. Process of Control Program Development>

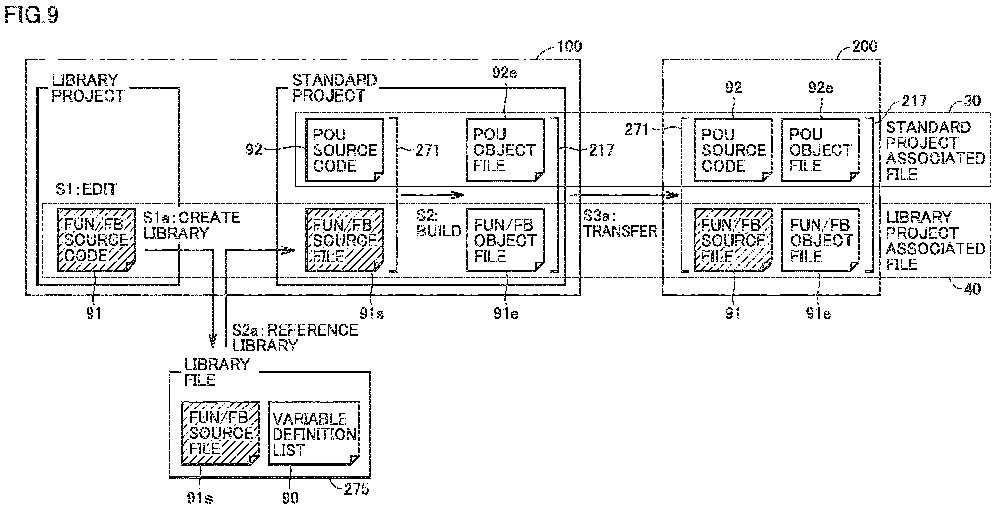

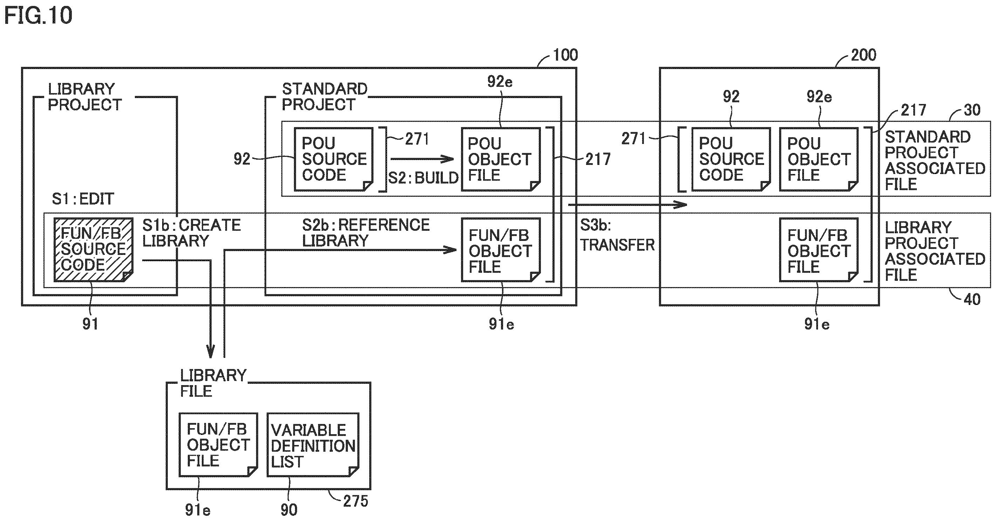

Data generated in the development of the control program in each of the first mode and the second mode and a process thereof in support device 100 are described. Fig. 9 is a diagram schematically showing a process of control program development in the first mode according to the present embodiment. Fig. 10 is a diagram schematically showing a process of control program development in the second mode according to the present embodiment. The processes in Figs. 9 and 10 each include a library project of creating library 275, and a standard project of generating executable file 217 and transferring the executable file to control device 200. These projects constitute the development tool provided by execution of development support program 50. The user operates these projects via GUI module 258. The processes handle an associated file 30 of the standard project and an associated file 40 of the library project. In these projects, codes of a program, a FUN and a FB, which are exemplary control programs, are handled on a file-by-file basis. In the following, a FUN/FB means a FUN and/or a FB.

The first mode of Fig. 9 is described. Associated file 40 of the library project includes a FUN/FB source code 91 generated by editor 252. The library project stores a FUN/FB source file 91s of generated FUN/FB source code 91 in library 275 from the library project (steps S1, S1a in Fig. 9). The library project also generates a variable definition list 90 of FUN/FB source code 91, and stores the variable definition list in association with FUN/FB source file 91s in library 275 (step S1a). In this way, the library project generates a FUN/FB including FUN/FB source code 91 (FUN/FB source file 91s) and variable definition list 90.

In the first mode, associated file 30 of the standard project includes: source code 271 of control program 210 built (step S2) by the library project; and executable file 217 combining object files 91e and 92e. More specifically, based on a reference instruction element, for example, an include instruction, in a file of a POU source code 92 (hereinafter referred to as POU source code 92) corresponding to second source code 214, the standard project references FUN/FB source file 91s and variable definition list 90 in library 275 (step S2a), and includes them in POU source code 92. The "reference instruction element" includes an instruction to reference a code stored in library 275. Such an include process generates source code 271, which includes POU source code 92 and a code of FUN/FB source file 91s.

The standard project generates object files 91e and 92e of an object code from POU source code 92 and FUN/FB source file 91s of generated source code 271, respectively, and combines generated object files 91e and 92e to generate executable file 217. The standard project transfers generated executable file 217 to control device 200 (step S3a in Fig. 9). In the first mode, the standard project transfers both source code 271 of control program 210 and executable file 217 of its object code to control device 200.

The second mode of Fig. 10 is now described. Although steps S1b, S2b and S3b of the process in the second mode are different from steps S1a, S2a and S3a of the process in the second mode, the process in the second mode is otherwise the same as that in the first mode and therefore will not be described again. Regarding the differences, first, in step S1b, the library project generates an object code from FUN/FB source code 91 generated by the editing, and stores FUN/FB object file 91e of the object code and variable definition list 90 in library 275 (step S1b). In the second mode, the library project does not store FUN/FB source file 91s of FUN/FB source code 91 in library 275 (step S1b). In step S2b, based on an include instruction included in POU source code 92 of source code 271, the standard project references FUN/FB object file 91e and variable definition list 90 in library 275 (step S2b). The standard project combines referenced FUN/FB object file 91e with POU object file 92e to generate executable file 217. In step S3b, the standard project transfers generated executable file 217 and source code 271 including only POU source code 92 to control device 200.

In this way, in the second mode, the library project creates, instead of FUN/FB source code 91, corresponding FUN/FB object file 91e, and stores the FUN/FB object file in library 275. In addition, the standard project and control device 200 include source code 271 including only POU source code 92 of control program 210, and executable file 217 of the object code, but does not include FUN/FB source file 91s.

Here, in Figs. 9 and 10, first source code 211 to be concealed in Fig. 1 corresponds to FUN/FB source code 91, second source code 214 other than first source code 211 in Fig. 1 corresponds to POU source code 92, and object code 21c in Fig. 1 corresponds to FUN/FB object file 91e. In this case, in the first mode of Fig. 9, FUN/FB source code 91 is stored in library 275, the standard project, and control device 200. In the first mode, therefore, FUN/FB source code 91 can be published without being concealed in library 275, the standard project, and control device 200.

In contrast, in the second mode of Fig. 10, FUN/FB source code 91 to be concealed is not stored in library 275, the standard project, and control device 200. In the second mode, therefore, FUN/FB source code 91 to be concealed can be concealed as FUN/FB object file 91e in library 275, the standard project, and control device 200.

An example of applying the above-described first mode and second mode to, without limitation, switching depending on the application of the control program is described. When a source code of a POU is allowed to be published to an end user but a source code of a FUN/FB in library 275 is requested to be concealed, a vendor sets instruction 51 to indicate the second mode. Accordingly, the process of Fig. 10 in the second mode is executed in support device 100, and the source code of the FUN/FB to be concealed can be concealed in control device 200 of the end user and in library 275 of the end user.

In contrast, when a source code of a FUN/FB in library 275 is to be published, the vendor sets instruction 51 to indicate the first mode. Accordingly, the process of Fig. 9 in the first mode is executed in support device 100, and the intended source code of the FUN/FB can be kept in a publishable manner without being concealed in control device 200 of the end user and in library 275 of the vendor.

### <G. Use Conditions>

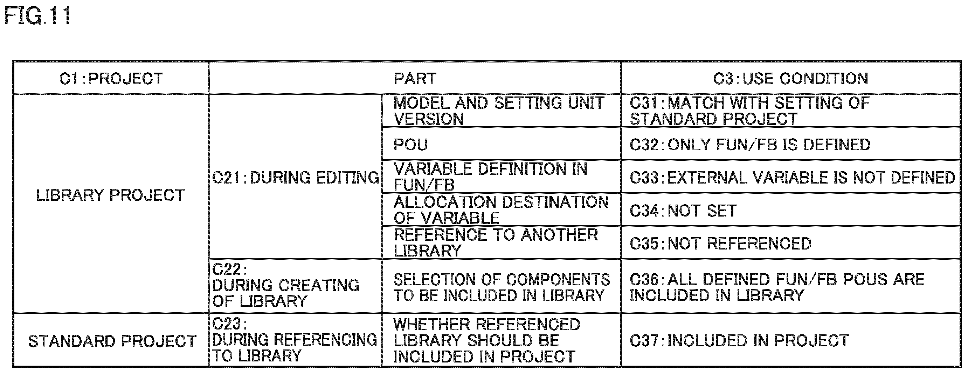

Fig. 11 is a diagram illustrating use conditions 274 according to the present embodiment. Although use conditions 274 are information in a table format, for example, the format of information is not limited as such. Use conditions 274 are referenced by the library project or the standard project in the second mode. More specifically, use conditions 274 include an identifier C1 of a referencing project, and a condition C3 indicating a condition to be determined.

Identifier C1 indicates the library project or the standard project. When identifier C1 is the library project, condition C3 includes conditions C31, C32, C33, C34 and C35 to be determined during editing C21 of the FUN/FB, and a condition C36 to be determined during creating C22 of library 275. When identifier C1 is the standard project, condition C3 includes a condition C37 referenced during referencing C23 to the library.

Condition C31 indicates that a model and a version described in the POU (including the FUN/FB) to be edited match with a model and a version set in the standard project. Condition C32 indicates that only the FUN/FB is defined as the POU to be edited. Condition C33 indicates that the definition of an external variable including a global variable is not described in the POU to be edited. Condition C34 indicates that an allocation destination setting of the variable is not described in the POU to be edited. Condition C35 indicates that a description referencing another library different from library 275 is not included in the POU to be edited. Condition C36 indicates that all FUNs/FBs defined in the standard project are stored in library 275.

When identifier C1 is the standard project, condition C37 includes a condition that library 275 be set as a library to be referenced by the standard project.

### <H. Process of Determination Module>

In the present embodiment, in response to the determination that instruction 51 indicates the second mode, support device 100 determines, as condition determination module 218, whether first source code 211 satisfies use conditions 274 for using the second mode. A process of such condition determination is described for each of a scene where new library 275 is created, a scene where a FUN/FB in already created library 275 is changed, and a scene where a version set for the standard project is changed.

### (h1. Process of Creating New Library)

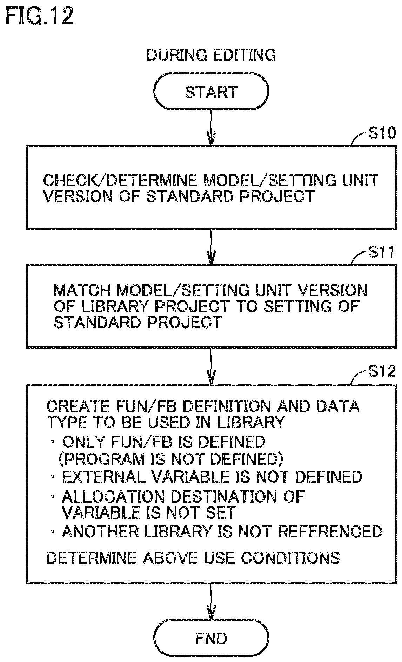

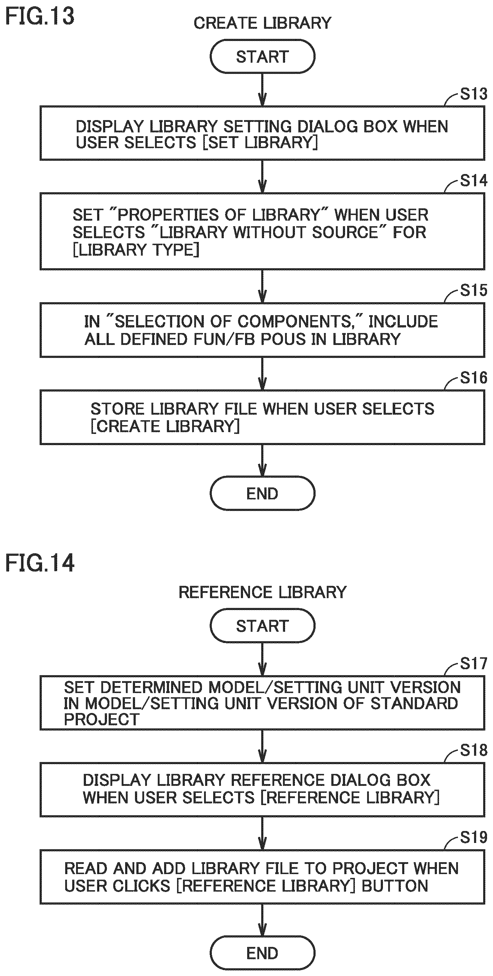

Fig. 12 is a flowchart showing a schematic process of editing a new FUN/FB in light of use conditions 274. Fig. 13 is a flowchart showing a schematic process of newly creating library 275. Figs. 12 and 13 show processes using the library project. Fig. 14 is a flowchart showing a schematic process of setting a library reference in the standard project. Fig. 14 shows a process using the standard project.

Referring to Fig. 12, support device 100 reliably determines information on a model/version of the standard project (step S10), and sets information on a model/version of the library project to match with the information determined for the standard project (step S11). Accordingly, support device 100 determines, as condition determination module 218, that condition C31 is satisfied. In step S10, support device 100 checks and determines a model/version of control device 200 indicated by configuration information 294.

Support device 100 also creates (declares), as editor 252, a FUN/FB definition and a data type to be used in the library based on a user operation received via GUI module 258, and determines whether use conditions 274 are satisfied (step S12). In this step S12, support device 100 determines, as condition determination module 218, whether a POU to be edited satisfies use conditions 274. More specifically, in response to instruction 51 indicating the second mode, support device 100 activates compiler 212, more specifically parser 213, in the background of editor 252. When activated, parser 213 parses a source code of the POU to be edited based on use conditions 274, and support device 100 determines, from a result of the parsing, whether the source code to be edited satisfies conditions C32 to C34.

When it is determined that the conditions are not satisfied, support device 100 displays, as GUI module 258, an error notification indicating the unsatisfied conditions. Support device 100 receives, as GUI module 258, a user operation on support device 100, and edits (corrects) the source code in accordance with the received user operation. In this way, the user can perform an operation of editing (correcting) the source code based on the indicated error to thereby generate a source code satisfying use conditions 274. The indicated error includes guidance such as a method for specifying and correcting the source code that does not satisfy use conditions 274.

Support device 100 interacts, as GUI module 258, with the user to create library 275. Specifically, in Fig. 13, when the user selects [Set Library] from a main menu displayed by GUI module 258, GUI module 258 displays a library setting dialog box (step S13). Support device 100 selects a "library without source" from the dialog box for [Library Type], and receives a user operation of setting "properties of library" (step S14).

Support device 100 selects all FUN/FB source codes 91 defined in "selection of components" specified by the user (step S15), and when an operation of selecting [Create Library] is received, support device 100 generates, by the builder, FUN/FB object file 91e from selected FUN/FB source codes 91, and stores the FUN/FB object file in library 275 (step S16).

Referring to Fig. 14, support device 100 sets the model/version determined in step S10 in the information on the model/version of the standard project (step S17). When support device 100 receives a user operation of selecting [Reference Library] via GUI module 258, support device 100 displays a library reference dialog box (step S18). When support device 100 receives a user operation of clicking a [Reference Library] button via GUI module 258, support device 100 builds the standard project. More specifically, support device 100 specifies, as builder 254, a FUN/FB referenced by the standard project (more specifically POU source code 92), reads FUN/FB object file 91e corresponding to the specified FUN/FB from library 275, and adds the read FUN/FB object file to the object code of the standard project by, for example, an include process (step S19). Support device 100 generates executable file 217 through such an include process.

When library 275 is newly created through the above-described process, support device 100 sets the standard project to reference FUN/FB object file 91e in this library 275.

### (h2. Process of Changing FUN/FB in Library)

In the present embodiment, support device 100 manages the library project or the standard project for each type (version) of control program 210 or for each model/version of control device 200.

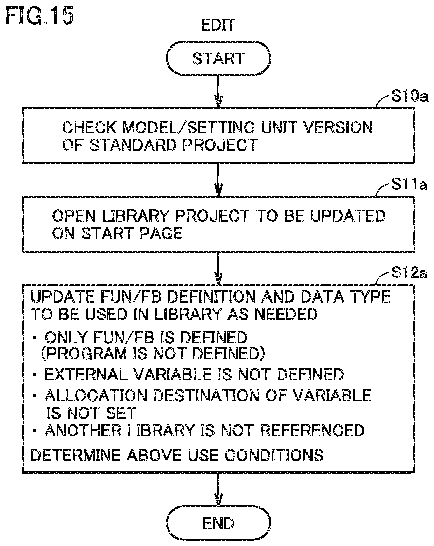

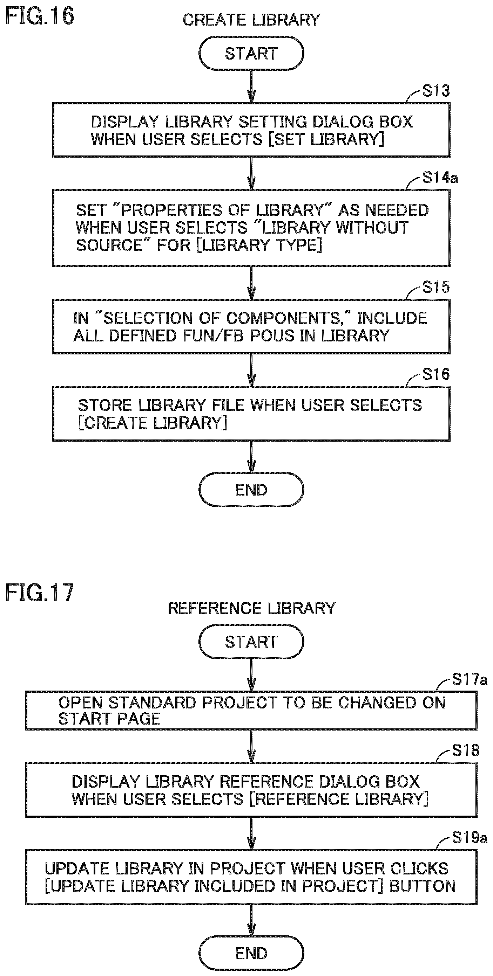

A process of changing a FUN/FB in library 275 is described. Fig. 15 is a flowchart showing a schematic process of changing a FUN/FB in the library project. Fig. 16 is a flowchart showing a schematic process of changing library 275. Fig. 17 is a flowchart showing a schematic process of changing a FUN/FB in the standard project.

In Fig. 15, support device 100 checks information on a model/version of the standard project (step S10a), as in step S10, and based on a user operation received via GUI module 258, selects and opens a library project to be updated from among a plurality of library projects (step S11a). Accordingly, FUN/FB source code 91 of associated file 40 of the selected library project is displayed on display unit 118 via GUI module 258. Support device 100 receives a user operation of editing displayed FUN/FB source code 91, and changes (edits) the source code in accordance with the received user operation (step S12a). When changing FUN/FB source code 91 in this manner, support device 100 determines whether the source code satisfies use conditions 274, as in step S12. FUN/FB source code 91 changed to satisfy use conditions 274 is generated.

To change library 275 using changed FUN/FB source code 91, support device 100 performs a process of Fig. 16. Although the "properties of library" are set as needed in step S14a in the process of Fig. 16, processing of the other steps is the same as that in Fig. 13 and therefore will not be described again. When the process of Fig. 16 is performed, FUN/FB object file 91e in library 275 is overwritten and updated with an object code generated from changed FUN/FB source code 91.

Support device 100 performs a process of Fig. 17 so that associated file 30 of the standard project is consistent with the change in corresponding associated file 40 of the library project. In the process of Fig. 17, support device 100 selects a standard project corresponding to the changed library project from among a plurality of standard projects, and opens (displays) the selected standard project via GUI module 258 (step S17a). When support device 100 receives a user operation of selecting [Reference Library] via GUI module 258, support device 100 displays the library reference dialog box (step S18). When support device 100 receives a user operation of clicking an [Update Library Included in Project] button via GUI module 258, support device 100 builds the standard project. More specifically, support device 100 specifies, as builder 254, a FUN/FB referenced by the standard project (more specifically POU source code 92), reads FUN/FB object file 91e corresponding to the specified FUN/FB from library 275, and adds the read FUN/FB object file to the object code of the standard project by, for example, an include process (step S19a). With such addition, a code of updated FUN/FB object file 91e in library 275 is included in the object code of the standard project, and support device 100 generates executable file 217 including the code of updated FUN/FB object file 91e.

When updating associated file 40 of the library project, support device 100 updates FUN/FB object file 91e in library 275 to be consistent with the update, and furthermore, rebuilds the standard project. Accordingly, support device 100 updates associated file 30 of the standard project to include updated FUN/FB object file 91e in library 275.

### (h3. Process of Changing Version Setting of Standard Project)

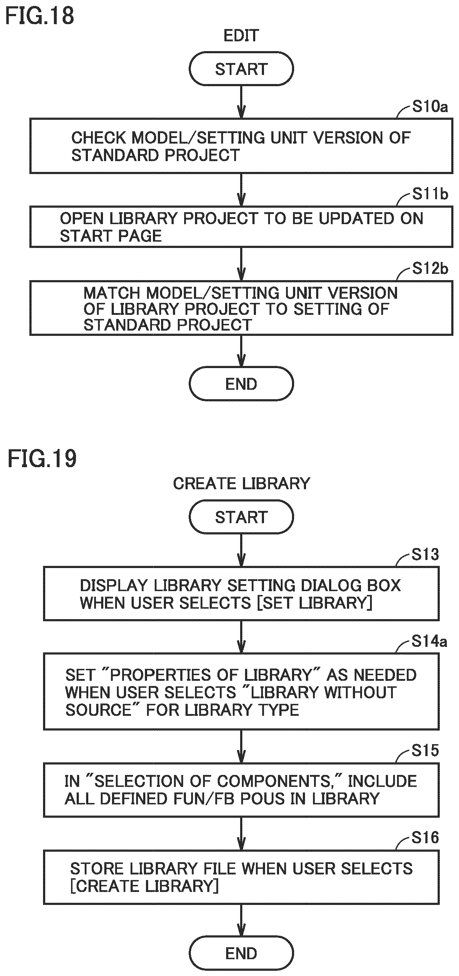

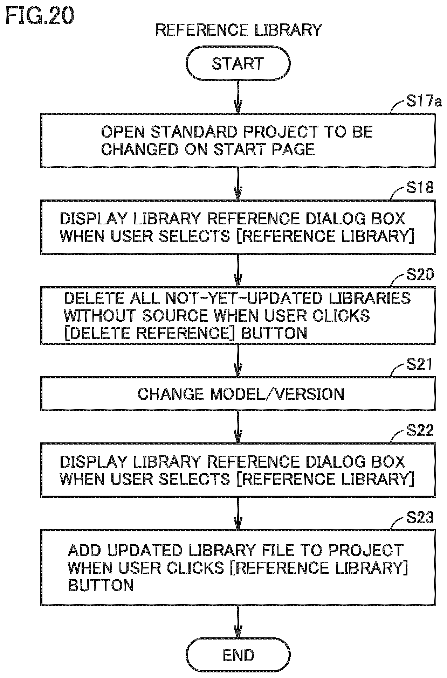

A process of changing a version setting of the standard project is described. Fig. 18 is a flowchart showing a schematic process of the library project when a version setting of the standard project is changed. Fig. 19 is a flowchart showing a schematic process of library 275 when the version setting of the standard project is changed. Fig. 20 is a flowchart showing a schematic process of the standard project when the version setting of the standard project is changed.

In Fig. 18, support device 100 performs the same processing as in step S10a and step S11a in Fig. 15, and in step S12b, support device 100 sets a changed model/version of the standard project to the model/version of the library project opened in step S11a. In Fig. 19, support device 100 performs the same processing as in steps S13 to S16 in Fig. 16. When the process of Fig. 19 is performed, FUN/FB object file 91e in library 275 is overwritten and updated with an object code generated from changed FUN/FB source code 91.

To perform rebuilding and change the version of the standard project, support device 100 performs a process of Fig. 20. In the process of Fig. 20, support device 100 opens a standard project to be changed on a start page screen via GUI module 258. POU source code 92 is thus displayed on the screen (step S17a). When support device 100 receives a user operation of selecting [Reference Library] from the main menu via GUI module 258, support device 100 displays the library reference dialog box (step S18).

When support device 100 receives a user operation of clicking a [Delete Reference] button on the screen, support device 100 deletes, from associated file 30 of the standard project, all FUN/FB object files 91e included by reference to the not-yet-updated library (step S20).

Support device 100 changes the model/version in the standard project based on, for example, a user operation (step S21). When support device 100 receives a user operation of selecting [Reference Library] from the main menu, support device 100 displays the [Reference Library] dialog box via GUI module 258 (step S22). When support device 100 receives an operation of clicking the [Reference Library] button via GUI module 258, support device 100 reads, from library 275, updated FUN/FB object file 91e of the FUN/FB referenced by the standard project, and adds the read FUN/FB object file to associated file 30 of the standard project (step S23).

When updating the model/version of the standard project, support device 100 updates FUN/FB object file 91e in library 275 to be consistent with the update, and furthermore, rebuilds the standard project to be consistent with the updated model/version. Accordingly, support device 100 updates associated file 30 of the standard project to include updated FUN/FB object file 91e in library 275.

### <I. FUN/FB That Satisfies Use Conditions>

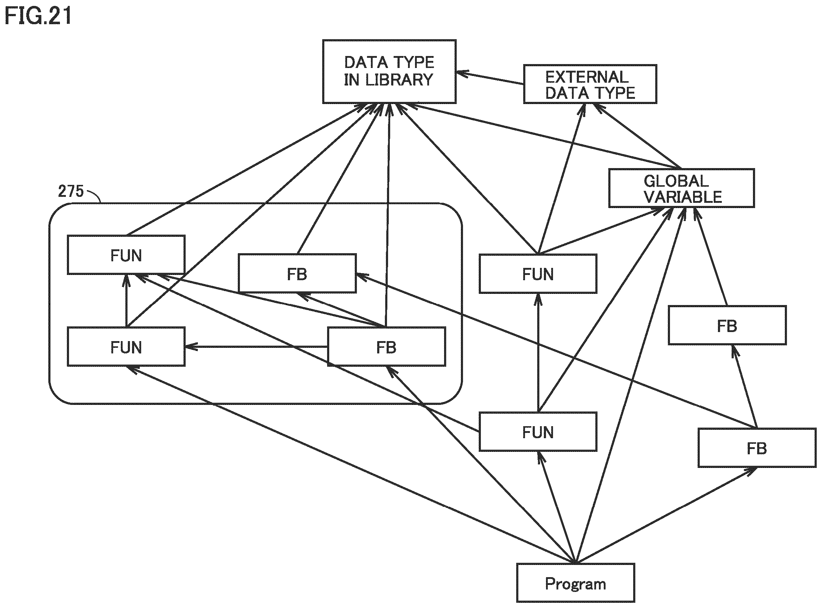

Fig. 21 is a schematic diagram illustrating library 275 satisfying use conditions 274 according to the present embodiment. Referring to Fig. 21, FUN/FB source code 91 created to satisfy use conditions 274 in the second mode depends on neither a data type used outside library 275 nor a global variable. Therefore, the FUN/FB stored in library 275 (i.e., FUN/FB object file 91e) declares only a local variable used only in this library, and is set to reference only the FUN/FB in library 275 when referencing another FUN/FB. Furthermore, FUN/FB source code 91 does not include any instruction element that assigns a variable to the input value or the output value of device 6.

A further description is provided with reference to Fig. 8. Areas other than the hatched areas of memory area 219 in Fig. 8 are reserved for the above-described global variable or variable to be allocated. A FUN/FB satisfying use conditions 274 in the second mode and stored in library 275 is created to declare only the local variable stored in the hatched areas of memory area 219. When executed, therefore, this FUN/FB accesses only the hatched areas, and does not access the other areas of memory area 219.

Since the FUN/FB satisfying use conditions 274 is created to access only the hatched areas of memory area 219 in this manner, the FUN/FB is not affected by a change in the other areas of memory area 219 (such as a change in a logical or physical address or a change in an area size) due to a change in the global variable (a change in the variable name or data type) or due to a change in the allocation variable to the input value or output value (a change in the variable name or data type) resulting from a change in a specification of device 6. As a result, it is not required to recreate library 275 and rebuild the standard project referencing library 275, and it is thus not required to reinstall FUN/FB object file 91e installed in control device 200.

### <J. Exemplary Processing of Standard Project>

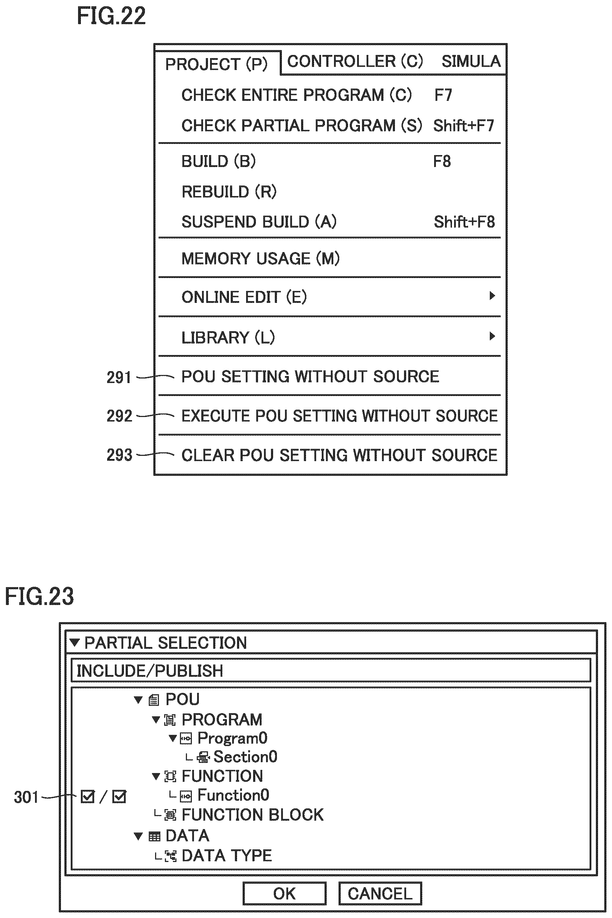

Figs. 22 and 23 are diagrams illustrating a procedure of creating library 275 in the standard project. POU source code 92 of associated file 30 of the standard project according to the present embodiment references (calls) one or a plurality of FUNs/FBs. When the second mode is indicated, support device 100 builds, based on a user operation and from specified POU source code 92, POU object file 92e constituted of only FUN/FB object file 91e referenced by the POU.

More specifically, support device 100 displays, as GUI module 258, screens of Figs. 22 and 23. When support device 100 receives an operation on a button 291 on the screen of Fig. 22, support device 100 displays the screen of Fig. 23, and receives an operation of specifying a selection 301 of a POU of associated file 30 of the standard project. When support device 100 receives an operation on a button 292 in Fig. 22, support device 100 generates, for a FUN/FB constituting the selected POU, FUN/FB object file 91e satisfying use conditions 274, and creates library 275 for storing generated FUN/FB object file 91e. Support device 100 also builds POU object file 92e referencing FUN/FB object file 91e in created library 275, and deletes original POU source code 92 from associated file 30 of the standard project. As a result of such processing, associated file 30 of the standard project does not include a source code for the POU selected by the user, but includes only corresponding POU object file 92e. When support device 100 receives an operation on a button 293 in Fig. 22, support device 100 deletes library 275 created in response to the operation on button 292.

### <K. Exemplary GUIs>

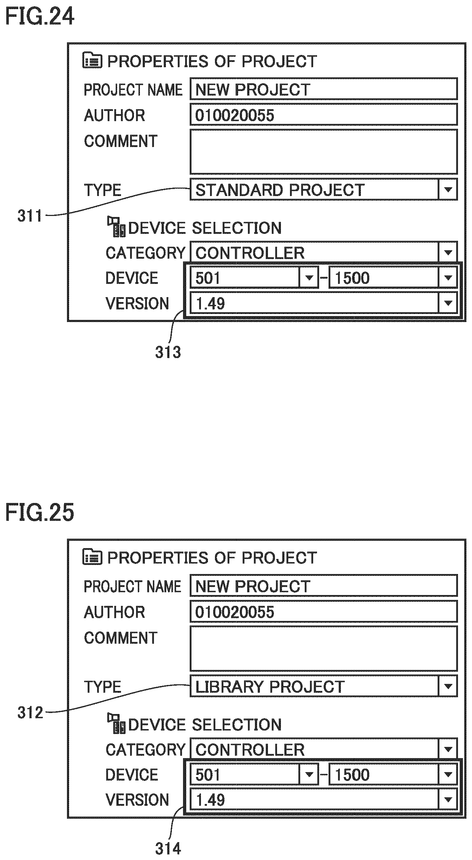

Figs. 24 to 30 are diagrams each showing an exemplary setting method by a GUI satisfying a use condition. Figs. 24 to 30 each show a screen that support device 100 causes display unit 118 to output as GUI module 258, which is configured to be able to receive an operation from the user. Fig. 24 shows an exemplary screen for receiving, in steps S10 and S11 in Fig. 12, an operation of setting the model/version of control device 200 to which the library project and the standard project are applied. A type 311 of the standard project and data 313 indicating an applied model/version are set on the screen of Fig. 24, and a type 312 of the library project and data 314 indicating an applied model/version are set on the screen of Fig. 25. Support device 100 compares the model/version of set data 313 with the model/version of set data 314, and determines that they match with each other based on a result of the comparison. Support device 100 causes display unit 118 to output an error notification indicating a mismatch. In response to the error notification, the user sets data 313, 314 indicating matching models/versions.

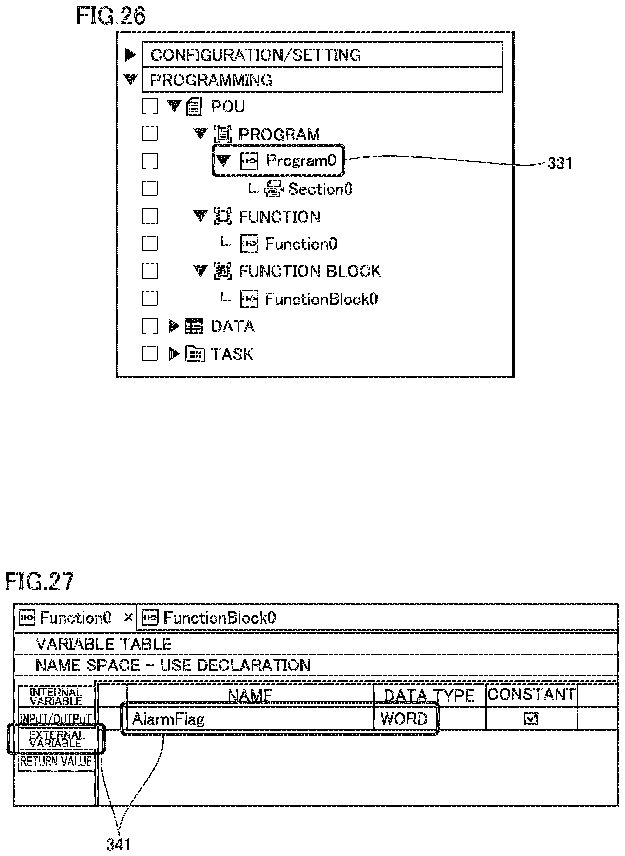

Fig. 26 shows an exemplary screen that support device 100 causes display unit 118 to output when condition C32 is determined. The screen of Fig. 26 displays data 331 indicating a result of determination that condition C32 is not satisfied. Data 331 represents an error notification indicating that a POU of a program has been defined in the creation of library 275. In response to the error notification, the user changes the definition from the program to a FUN/FB.

Fig. 27 shows an exemplary screen that support device 100 causes display unit 118 to output when condition C33 is determined. The screen of Fig. 27 displays data 341 indicating a result of determination that condition C33 is not satisfied. Data 341 represents an error notification indicating that an external variable such as a global variable has been declared in a variable declaration unit of the FUN/FB in the creation of library 275. In response to the error notification, the user deletes the declaration of the external variable from the variable declaration unit.

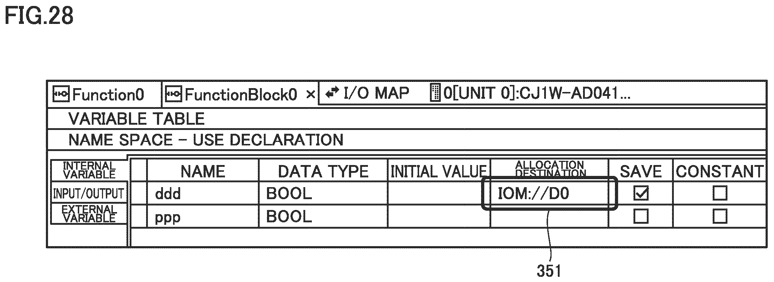

Fig. 28 shows an exemplary screen that support device 100 causes display unit 118 to output when condition C34 is determined. The screen of Fig. 28 displays data 351 indicating a result of determination that condition C34 is not satisfied. Data 351 represents an error notification indicating that a variable allocation has been declared for the FUN/FB in the creation of library 275. In response to the error notification, the user deletes the declaration of the variable allocation.

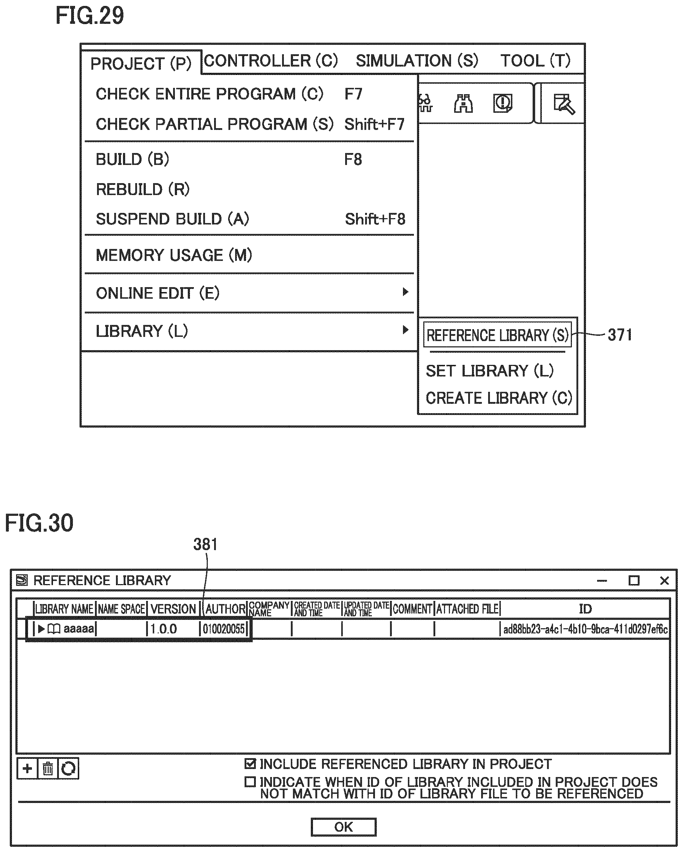

Figs. 29 and 30 each show an exemplary screen that support device 100 causes display unit 118 to output when condition C35 is determined. The screen of Fig. 30 is displayed when the user clicks a [Reference Library] button 371 on the screen of Fig. 29 when creating library 275. The screen of Fig. 30 displays data 381 indicating a result of determination that condition C35 is not satisfied. Data 381 represents an error notification indicating that another library different from library 275 is referenced in the creation of library 275. In response to the error notification, the user deletes the reference to the another library.

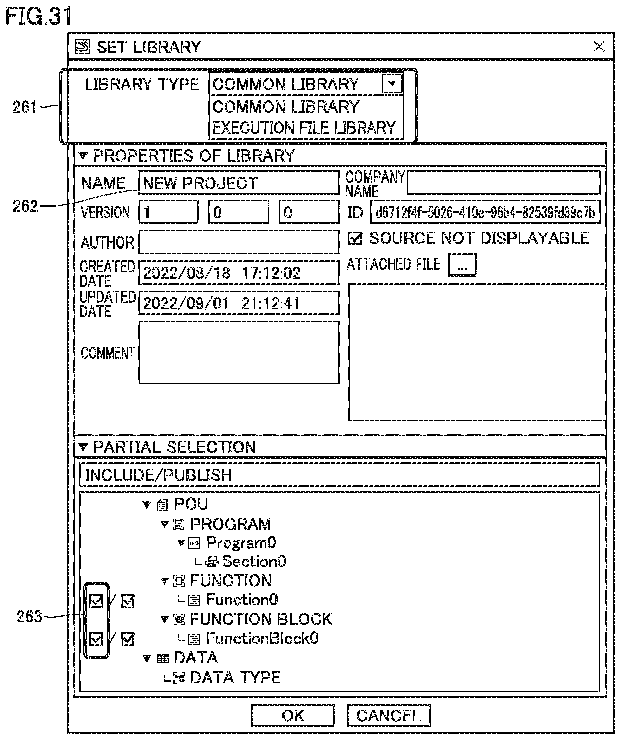

Figs. 31 to 33 are diagrams each showing an exemplary GUI that receives a user operation of inputting instruction 51 for support device 100. Support device 100 causes display unit 118 to display the screens of Figs. 31 to 33 as GUI module 258. Fig. 31 shows an exemplary screen that receives instruction 51 when creating library 275. The screen of Fig. 31 includes: a button 261 operated to specify one of the first mode and the second mode; a box 262 for receiving a user operation of specifying an identifier (name) of a library to be created; and a button 263. Support device 100 creates, in accordance with the mode indicated by instruction 51 received via button 261, library 275 of the identifier received in box 262. In this way, support device 100 receives, on the screen of Fig. 31, instruction 51 indicating both the identifier and the creation mode of library 275 specified by the user operation. Support device 100 can be configured to create and store a plurality of types of libraries 275, and in this configuration, support device 100 receives, for each library, instruction 51 specifying the first mode or the second mode for the library.

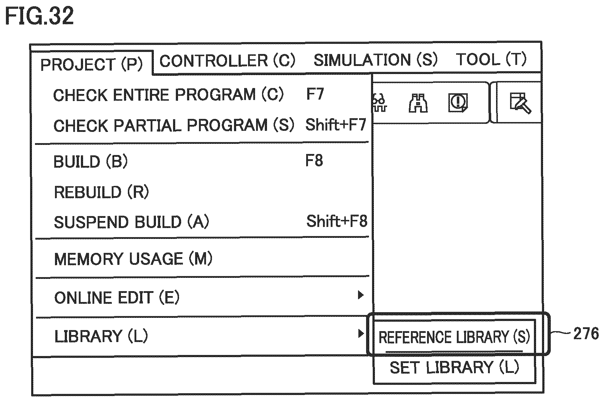

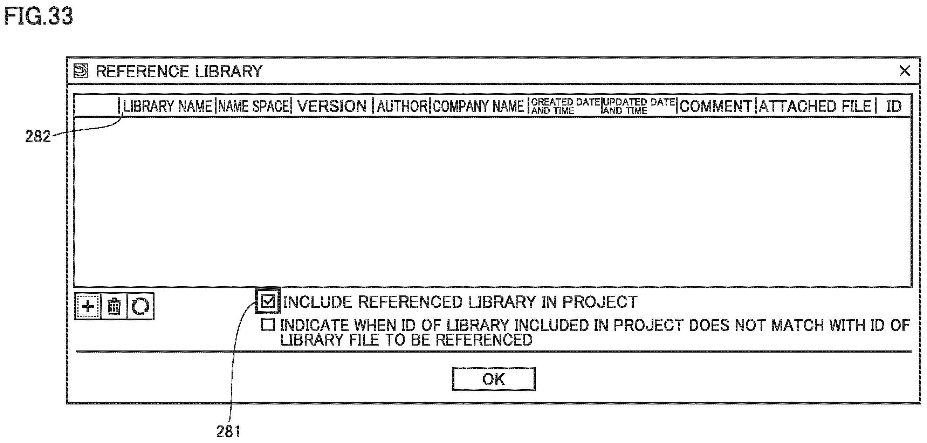

Figs. 32 and 33 each show an exemplary screen displayed when creating POU source code 92 of associated file 30 of the standard project. A box 276 on the screen of Fig. 32 is configured to be able to receive a user operation for setting a "reference instruction element" of library 275 for POU source code 92. When support device 100 receives a user operation via box 276, support device 100 displays the screen of Fig. 33. The screen of Fig. 33 includes: a box 282 that receives an operation of specifying library 275 to be referenced; and a box 281 that receives an operation indicating a reference. When support device 100 is configured to create and store a plurality of types of libraries 275, support device 100 creates, when creating associated file 30 of the standard project, POU source code 92 having a "reference instruction element" indicating a reference to a specified library of the plurality of libraries. The specifying of library 275 to be referenced can also be implemented by using the above-described specifying of the model/version.

### <L. Program>

Storage device 120 storing development support program 50 is, for example, an auxiliary storage device such as a hard disk drive or a solid state drive, which stores the program in a nonvolatile manner. Alternatively, development support program 50 may be stored in a storage medium different from storage device 120. Such a storage medium is a medium storing information such as a recorded program by electrical, magnetic, optical, mechanical, or chemical action in such a manner as to allow a computer, another device, machine and the like to read the information such as a program. Support device 100 may obtain development support program 50 and/or a program and data associated with development support program 50 from such a storage medium, or may obtain it/them by downloading from another device over a network.

### <M. Additional Notes>

The embodiment as described above includes technical ideas as set out below.

### [Configuration 1]

A development support device (200) for supporting development of a control program (210) for a control device (200) configured to control a target (6),
a source code (271) of the control program including a first source code (211, 91s) to be concealed and a second source code (214, 90, 92) other than the first source code,
the development support device comprising:
   a reception unit (115) configured to receive an instruction (51) for the development support device;
   a determination unit (251) configured to determine whether the instruction received by the reception unit indicates a first mode or a second mode; and
   a code generation unit (254) configured to generate an object code from the source code of the control program and output the object code, wherein
   in response to a determination that the received instruction indicates the first mode, the code generation unit outputs, for the first source code (91s), both the first source code and a first object code (91e) generated from the first source code, and
   in response to a determination that the received instruction indicates the second mode, the code generation unit outputs the first object code (91e) generated from the first source code (91s) without outputting the first source code.

### [Configuration 2]

The development support device according to Configuration 1, further comprising:
a communication interface (111) configured to allow communication between the development support device and the control device; and
a transfer unit (257) configured to transfer a code output from the code generation unit to the control device via the communication interface.

### [Configuration 3]

The development support device according to Configuration 1 or 2, further comprising:
a library (275) of the control program; and
a first project configured to store, in each of the first mode and the second mode, a code output from the code generation unit in that mode in the library of the control program.

### [Configuration 4]

The development support device according to Configuration 3, further comprising a second project configured to generate a file to be transferred to the control device, wherein
the second source code includes a reference instruction element configured to indicate a reference to a code stored in the library, and
in each of the first mode and the second mode, the second project references a code stored in the library in that mode in accordance with the reference instruction element of the second source code, and includes the code in the file.

### [Configuration 5]

A method for supporting development of a control program (210) for a control device (200) configured to control a target (6),
a source code (271) of the control program including a first source code (211, 91s) to be concealed and a second source code (214, 90, 92) other than the first source code,
the method comprising:
   receiving an instruction (51);
   determining whether the received instruction indicates a first mode or a second mode; and
   generating an object code from the source code of the control program and outputting the object code, wherein
   the generating and outputting the object code includes
      in response to a determination that the received instruction indicates the first mode, outputting, for the first source code (91s), both the first source code and a first object code (91e) generated from the first source code, and
      in response to a determination that the received instruction indicates the second mode, outputting the first object code (91e) generated from the first source code without outputting the first source code.

### [Configuration 6]

A development support program (50) for causing a computer (100) to execute a method for supporting development of a control program (210) for a control device (200) configured to control a target (6),
a source code (271) of the control program including a first source code (211, 91s) to be concealed and a second source code (214, 90, 92) other than the first source code,
the method comprising:
   receiving an instruction (51);
   determining whether the received instruction indicates a first mode or a second mode; and
   generating an object code from the source code of the control program and outputting the object code, wherein
   the generating and outputting the object code includes
      in response to a determination that the received instruction indicates the first mode, outputting, for the first source code (91s), both the first source code and a first object code (91e) generated from the first source code, and
      in response to a determination that the received instruction indicates the second mode, outputting the first object code (91e) generated from the first source code (91s) without outputting the first source code.

It should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

### REFERENCE SIGNS LIST

6 device; 10 FA system; 30, 40 associated file; 50 development support program; 51 instruction; 90, 272 variable definition list; 271 source code; 217 executable file; 91e, 92e, 273 object file; 100 support device; 102 processor; 104 main memory; 105 optical disk; 111 communication interface; 115 operation unit; 117 display interface; 118 display unit; 120 storage device; 125 internal bus; 200 control device; 210 control program; 210s source program; 211 first source code; 212 compiler; 213 parser; 214 second source code; 215 list generation module; 216 linker; 218 condition determination module; 219 memory area; 250 programming application; 251 mode determination module; 252 editor; 254 builder; 256 debugger; 257 loader; 258 GUI module; 260 determination module; 270, 299 data storage unit; 274 use condition; 275 library; 280 associated application; 294 configuration information.

## Claims

1. A development support device for supporting development of a control program for a control device configured to control a target,
a source code of the control program including a first source code to be concealed and a second source code other than the first source code,
the development support device comprising:
a reception unit configured to receive an instruction for the development support device;
a determination unit configured to determine whether the instruction received by the reception unit indicates a first mode or a second mode; and
a code generation unit configured to generate an object code from the source code of the control program and output the object code, wherein
in response to a determination that the received instruction indicates the first mode, the code generation unit outputs, for the first source code, both the first source code and a first object code generated from the first source code, and
in response to a determination that the received instruction indicates the second mode, the code generation unit outputs the first object code generated from the first source code without outputting the first source code.

2. The development support device according to claim 1, further comprising:
a communication interface configured to allow communication between the development support device and the control device; and
a transfer unit configured to transfer a code output from the code generation unit to the control device via the communication interface.

3. The development support device according to claim 1 or 2, further comprising:
a library of the control program; and
a first project configured to store, in each of the first mode and the second mode, a code output from the code generation unit in that mode in the library of the control program.

4. The development support device according to claim 3, further comprising a second project configured to generate a file to be transferred to the control device, wherein
the second source code includes a reference instruction element configured to indicate a reference to a code stored in the library, and
in each of the first mode and the second mode, the second project references a code stored in the library in that mode in accordance with the reference instruction element of the second source code, and includes the code in the file.

5. A method for supporting development of a control program for a control device configured to control a target,
a source code of the control program including a first source code to be concealed and a second source code other than the first source code,
the method comprising:
receiving an instruction;
determining whether the received instruction indicates a first mode or a second mode; and
generating an object code from the source code of the control program and outputting the object code, wherein
the generating and outputting the object code includes
in response to a determination that the received instruction indicates the first mode, outputting, for the first source code, both the first source code and a first object code generated from the first source code, and
in response to a determination that the received instruction indicates the second mode, outputting the first object code generated from the first source code without outputting the first source code.

6. A development support program for causing a computer to execute a method for supporting development of a control program for a control device configured to control a target,
a source code of the control program including a first source code to be concealed and a second source code other than the first source code,
the method comprising:
receiving an instruction;
determining whether the received instruction indicates a first mode or a second mode; and
generating an object code from the source code of the control program and outputting the object code, wherein
the generating and outputting the object code includes
in response to a determination that the received instruction indicates the first mode, outputting, for the first source code, both the first source code and a first object code generated from the first source code, and
in response to a determination that the received instruction indicates the second mode, outputting the first object code generated from the first source code without outputting the first source code.
